# EUROPÄISCHE PATENTSCHRIFT

(11) **EP 2 430 374 B1**
(45) Veröffentlichungstag und Bekanntmachung des Hinweises auf die Patenterteilung: **03.10.2018**
(21) Anmeldenummer: 10724991.4
(22) Anmeldetag: 12.05.2010
(51) Int. Cl.: F24S 10/75, F24S 60/30

(54) **VORRICHTUNG ZUM ERWÄRMEN VON BRAUCHWASSER**
DEVICE FOR HEATING PROCESS WATER
DISPOSITIF POUR ÉCHAUFFER DE L'EAU SANITAIRE

(30) Priorität: 12.05.2009 AT 7192009
(43) Veröffentlichungstag der Anmeldung: 21.03.2012
(73) Patentinhaber: Höntzsch, Gertraud, 5310 Mondsee (AT)
(72) Erfinder:
(74) Vertreter: Patentanwaltskanzlei Hübscher
(86) Internationale Anmeldenummer: PCT/AT2010/000163
(87) Internationale Veröffentlichungsnummer: WO 2011/140574

(56) Entgegenhaltungen:
- WO-A1-83/01501
- WO-A1-03/006896
- DE-A1-102004 032 091
- DE-U1-202006 015 934
- US-A- 3 952 725
- US-A- 4 117 829

## Beschreibung

### Technisches Gebiet

Die Erfindung bezieht sich auf eine Vorrichtung zum Erwärmen von Brauchwasser mit einem Sonnenkollektor, der einen Brauchwasserbehälter mit einem teilzylindrischen Mantel als Absorber sowie eine den Brauchwasserbehälter abdeckende Einhausung umfasst, die einen lichtdurchlässigen zylindrischen Mantel bildet, dessen Achse parallel zur Achse des Mantels des Brauchwasserbehälters verläuft.

### Stand der Technik

Soll Brauchwasser mit Hilfe von Sonnenenergie erwärmt werden, so werden üblicherweise Sonnenkollektoren eingesetzt, die ein wannenförmiges Gestell mit einer als Absorber wirksamen Bodenplatte aufweisen, auf der zum Beispiel parallele, rohrförmige Strömungskanäle für Wasser als Wärmeträger vorgesehen sind. Die Wanne mit der Absorberplatte und den Strömungskanälen, die an eine Verteiler- und eine Sammelleitung angeschlossen sind, ist mit einer lichtdurchlässigen Abdeckung versehen, sodass insbesondere die Wärmestrahlung von der Absorberplatte und den darauf angeordneten Strömungskanälen aufgenommen und die aufgenommene Wärme auf den Wärmeträger übertragen wird, mit dessen Hilfe, ein Brauchwasserspeicher über einen Wärmetauscher geladen wird. Nachteilig bei solchen Sonnenkollektoren ist, dass eine entsprechende Ausrichtung gegenüber der Sonneneinstrahlung erforderlich ist und dass zur Brauchwassererwärmung ein Warmwasserspeicher erforderlich wird, der über einen Wärmetauscher an den Sonnenkollektor angeschlossen wird.

Um diese Nachteile zu vermeiden, wurde bereits vorgeschlagen (DE 20 2006 015 934 U1), den Mantel eines zylindrischen Brauchwasserbehälters als Absorber zu nützen und zu diesem Zweck den Brauchwasserbehälter mit einer Einhausung zu versehen, deren lichtdurchlässiger Mantel einen Halbzylinder mit einer zur Behälterachse parallelen Achse bildet. Die Zylinderform des Brauchwasserbehälters bedingt dabei im Zusammenwirken mit der einen Mantel in Form eines Halbzylinders bildenden Einhausung eine weitgehende Unabhängigkeit der Vorrichtung vom Einstrahlungswinkel des Sonnenlichts, wenn die Achse des Behälters bzw. der Einhausung angenähert in einer Nord-Süd-Richtung ausgerichtet wird, sodass für eine im Wesentlichen radiale Lichteinstrahlung in die Einhausung gesorgt ist. Aufgrund der temperaturabhängigen Dichte des Brauchwassers sammelt sich das erwärmte Brauchwasser im oberen Bereich des liegenden Brauchwasserbehälters und kann über eine obere Warmwasserleitung unter gleichzeitiger Zufuhr von kaltem Wasser in den Bodenbereich entnommen werden. Zur Verringerung der Wärmeverluste ist außerdem der Mantel der Einhausung auf der Innenseite mit einem lichtdurchlässigen Gewirke abgedeckt, um bei niedrigen Außentemperaturen eine Wärmeabgabe nach außen zu verringern. Außerdem wird versucht, das in die Einhausung einfallende Licht durch einen lichtreflektierenden Boden besser zu nützen. Trotz dieser Maßnahmen bleibt jedoch der Wirkungsgrad beschränkt.

WO 03/006896 A1 offenbart eine andere Vorrichtung zum Erwärmen von Brauchwasser mit einem Sonnenkollektor, der einen Brauchwasserbehälter mit einem zylindrischen Mantel als Absorber sowie eine den Brauchwasserbehälter abdeckende Einhausung umfasst, die einen lichtdurchlässigen Mantel bildet.

### Darstellung der Erfindung

Der Erfindung liegt somit die Aufgabe zugrunde, den Wirkungsgrad bei Sonnenkollektoren anzuheben, bei denen der Mantel des Brauchwasserbehälters als Absorber genützt wird.

Ausgehend von einer Vorrichtung zum Erwärmen von Brauchwasser der eingangs geschilderten Art löst die Erfindung die gestellte Aufgabe dadurch, dass der Brauchwasserbehälter mit einer einen Boden der Einhausung bildenden Absorberplatte wärmeleitend verbunden ist und dass die Absorberplatte und der Mantel des Brauchwasserbehälters mit einem grobmaschigen, wärmedämmenden Gewebe abgedeckt sind.

Das Vorsehen einer zusätzlichen, den Boden der Einhausung bildenden Absorberplatte, die mit dem Brauchwasserbehälter wärmeleitend verbunden ist, bringt eine bessere Ausnützung der durch die Einhausung einfallenden Wärmestrahlung mit sich, weil die durch diese Wärmestrahlung erwärmte Absorberplatte die aufgenommene Wärme an den Brauchwasserbehälter weiterleitet. Die Abdeckung dieser Absorberplatte und des Mantels des Brauchwasserbehälters mit einem grobmaschigen, wärmedämmenden Gewebe unterbindet eine unmittelbare Berührung von sich innerhalb der Einhausung konvektionsbedingt ausbildender Luftströmungen mit der Absorberplatte und dem Brauchwasserbehälter, was zu einer höheren Temperatur der Absorberplatte bzw. einer geringeren Abkühlung des Brauchwasserbehälters und damit zu verbesserten Erwärmungsverhältnissen für das Brauchwasser führt. Die Grobmaschigkeit des Gewebes stellt dabei den unmittelbaren Durchtritt der Wärmestrahlung zur Absorberplatte und zum Brauchwasserbehälter durch das Gewebe sicher, wobei sich besonders gute Erwärmungsbedingungen ergeben, wenn das Gewebe selbst für die Wärmestrahlung durchlässig ist, wie dies bei einem Glasfasergewebe der Fall ist.

Um einen vorteilhaften Wärmeübergang zwischen der Absorberplatte und dem Brauchwasserbehälter zu gewährleisten, nimmt die Absorberplatte den Brauchwasserbehälter in einer sich an den Behältermantel anschmiegenden zylindrischen Auswölbung auf, sodass sich eine vergrößerte Wärmeübertragungsfläche ergibt. Zur Befestigung des Brauchwasserbehälters kann dieser mit der Absorberplatte verschweißt oder verlötet werden.

Diese Konstruktion bietet sich vor allem für Brauchwasserbehälter mit einem kreiszylindrischen Mantel an. Die Erfindung ist jedoch nicht auf solche kreiszylindrische Brauchwasserbehälter beschränkt. Besonders einfache nicht erfindungsgemäße Konstruktionsbedingungen ergeben sich nämlich, wenn der Brauchwasserbehälter aus dem angenähert einen Halbzylinder bildenden Mantel und einer an der Innenseite dieses Mantels angeschlossenen zylindrischen Wand zusammengesetzt ist, deren Achse senkrecht zur Mantelachse verläuft. Da zufolge dieser Maßnahme der Brauchwasserbehälter aus zwei Blechzuschnitten gefertigt werden kann, die jeweils für sich zylindrisch gebogen und dann miteinander verschweißt werden, können vergleichsweise einfache Herstellungsbedingungen eingehalten werden. Der die zylindrische Wand des Brauchwasserbehälters nach außen abschließende, halbzylindrische Mantel des Brauchwasserbehälters bildet zumindest im Anschlussbereich der zylindrischen Wand vorstehende Randabschnitte, die eine zusätzliche Absorberfläche darstellen, was sich vorteilhaft auf den Wärmeübergang auswirkt, zumal der halbzylindrische Mantel des Brauchwasserbehälters zumindest angenähert gleichachsig mit dem ebenfalls einen Halbzylinder formenden Mantel der Einhausung angeordnet werden kann, sodass die Wärmestrahlung im Wesentlichen radial bezüglich des Mantels der Einhausung und des Mantels des Brauchwasserbehälters ausgerichtet ist, und zwar weitgehend unabhängig von der tageszeitlichen Änderung des Sonnenstands.

Mit einem Mantel des Brauchwasserbehälters in Form eines Halbzylinders ergeben sich außerdem vorteilhafte Anbindungen des Brauchwasserbehälters an die Absorberplatte, wenn der Mantel des Brauchwasserbehälters einstückig mit der Absorberplatte ausgebildet wird.

### Kurze Beschreibung der Zeichnung

In der Zeichnung ist der Erfindungsgegenstand beispielsweise dargestellt. Es zeigen
Fig. 1 eine erfindungsgemäße Vorrichtung zum Erwärmen von Brauchwasser in einem schematischen Querschnitt,
Fig. 2 diese Vorrichtung in einem Längsschnitt nach der Linie II-II der Fig.1,
Fig. 3 eine der Fig. 1 entsprechende Darstellung einer Ausführungsvariante einer nicht erfindungsgemäßen Vorrichtung zum Erwärmen von Brauchwasser und
Fig. 4 die Vorrichtung nach der Fig. 3 in einem Schnitt nach der Linie IV-IV der Fig. 3.

### Wege zur Ausführung der Erfindung

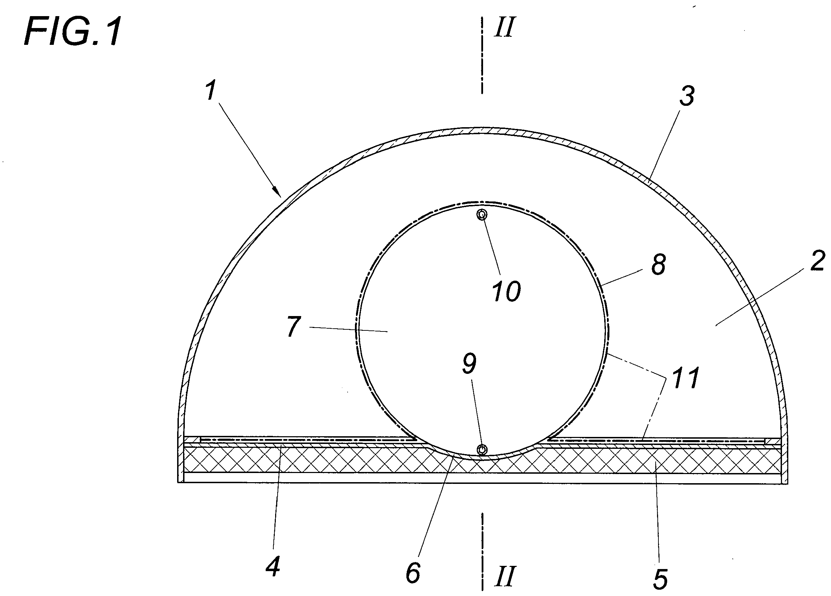

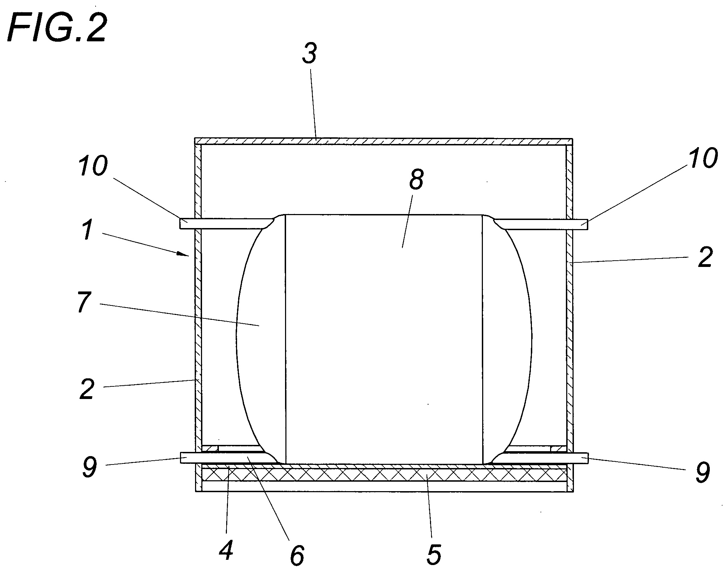

Die Vorrichtung zum Erwärmen von Brauchwasser weist gemäß dem Ausführungsbeispiel nach den Fig. 1 und 2 einen Sonnenkollektor mit einer Einhausung 1 auf, die aus zwei halbkreisförmigen Stirnwänden 2 und einem nach einem halben Kreiszylinder gewölbten Mantel 3 aus einem lichtdurchlässigen Werkstoff zusammengesetzt ist. Der Boden dieser Einhausung 1 wird durch eine wärmeleitende Absorberplatte 4, vorzugsweise aus einem metallischen Werkstoff, beispielsweise Kupfer oder Aluminium, gebildet und ist auf der dem Mantel 3 abgewandten Seite mit einer Wärmeisolierung 5 versehen. Im Bereich der Zylinderachse der Einhausung 1 bildet die Absorberplatte 4 eine zylindrische Auswölbung 6, die einen liegenden, zylindrischen Behälter 7 aufnimmt, dessen Achse parallel zur Achse der Einhausung 1 verläuft. Die Anordnung ist dabei so getroffen, dass sich der Mantel 8 des Brauchwasserbehälters 7 flächig an die zylindrische Auswölbung 6 der Absorberplatte 4 anschmiegt, was einen vorteilhaften Wärmeübergang von der Absorberplatte 4 auf den Behältermantel 8 gewährleistet.

Der Brauchwasserbehälter 7 ist unten an eine Kaltwasserleitung 9 und oben an eine Warmwasserleitung 10 angeschlossen, sodass das sich im oberen Bereich des Brauchwasserbehälters 7 sammelnde Warmwasser über die Warmwasserleitung 10 unter gleichzeitiger Zufuhr von Kaltwasser in den unteren Bereich des Brauchwasserbehälters 7 abgeführt werden kann, der aufgrund der geschilderten Anordnung innerhalb der Einhausung 1 einen Brauchwasserspeicher mit einer üblichen Temperaturschichtung des Brauchwassers bildet. Für den Fall, dass mehrere Vorrichtungen dieser Art in Reihe geschaltet werden, sind die einzelnen Brauchwasserbehälter 7 mit Kaltwasserleitungen 9 und Warmwasserleitungen 10 auf einander gegenüberliegenden Stirnseiten zu versehen, wie dies in der Fig. 2 dargestellt ist. Diese Reihenschaltung erlaubt einen Temperaturausgleich über die einzelnen Brauchwasserbehälter 7 hinweg, was insbesondere bei einer Aufstellung der einzelnen Vorrichtungen in unterschiedlichen Höhenlagen von besonderer Bedeutung ist. Für den Einsatz der Vorrichtungen je für sich sind die Leitungen 9 und 10 auf einer Seite zu verschließen bzw. fortzulassen.

Da die Vorrichtung vorteilhaft so aufgestellt wird, dass die Achse der Einhausung 1 bzw. des Brauchwasserbehälters 7 annähernd in Nord-Süd-Richtung verläuft, ergibt sich eine im Wesentlichen radiale Lichteinstrahlung während des täglichen Sonnenlichteinfalls, sodass vorteilhafte Verhältnisse hinsichtlich der Wärmeeinstrahlung vorliegen, und zwar nicht nur für die Absorberplatte 4, sondern auch für den Brauchwasserbehälter 7. Zur Verbesserung dieser Erwärmungsverhältnisse werden die Absorberplatte 4 und der Mantel 8 des Brauchwasserbehälters 7 mit einem grobmaschigen, wärmedämmenden Gewebe 11 abgedeckt, wie dies in der Fig. 1 strichpunktiert angedeutet ist. Die Maschen dieses Gewebes 11 verhindern eine Luftströmung unmittelbar entlang des Brauchwasserbehälters 7 bzw. der Absorberplatte 4 aufgrund der innerhalb der Gewebemaschen gefangenen Luftpolster. Dies bedeutet, dass sich konvektionsbedingte Luftströmungen innerhalb der Einhausung 1 nicht nachteilig auf den Wärmeübergang im Bereich der Absorberplatte 4 bzw. des Brauchwasserbehälters 7 auswirken können. Die groben Maschen des Gewebes 11 erleichtern den Durchgang der Wärmestrahlung durch das Gewebe 11, wobei sich insbesondere bei Glasfasergeweben vorteilhafte Konstruktionsverhältnisse einstellen, weil dann das Gewebe 11 selbst für die Wärmestrahlung durchlässig ist. Durch das Aufbringen eines solchen grobmaschigen, wärmedämmenden Gewebes 11 kann somit der Wirkungsgrad zusätzlich verbessert werden.

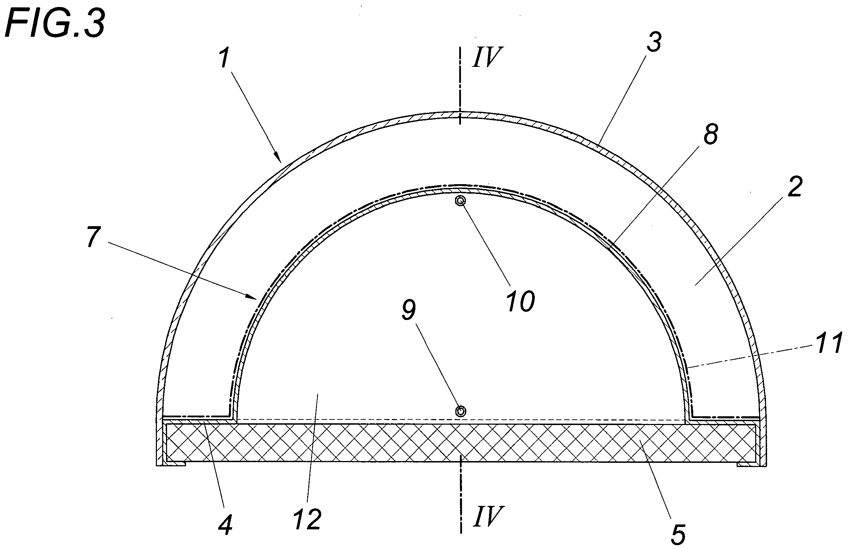

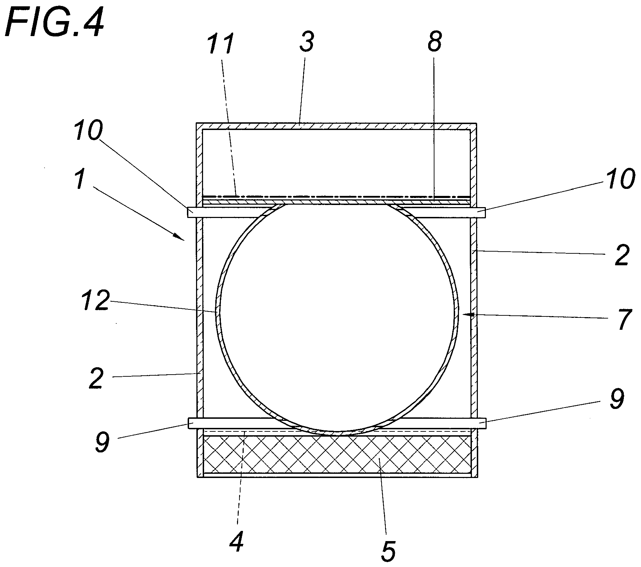

Der wesentliche Unterschied zwischen der Ausführungsform nach den Fig. 1 und 2 einerseits und der nicht erfindungsgemäßen Ausführungsform nach den Fig. 3 und 4 anderseits besteht in der Konstruktion des Brauchwasserbehälters 7. Während der Mantel 8 des Brauchwasserbehälters 7 gemäß den Fig. 1 und 2 einen geschlossenen Kreiszylinder bildet, ist der Mantel 8 des Brauchwasserbehälters 7 nach den Fig. 3 und 4 in Form eines Halbzylinders ausgebildet, der im Wesentlichen koaxial zum Mantel 3 der Einhausung 1 verläuft. Dieser halbzylindrische Mantel 8 des Brauchwasserbehälters 7 schließt eine gegen diesen Mantel 8 offene zylindrische Wand 12 nach außen ab, wobei die Anordnung so getroffen ist, dass der halbzylindrische Mantel 8 des Brauchwasserbehälters 7 in axialer Richtung über die zylindrische Wand 12 beidseitig vorsteht, wie dies der Fig. 4 entnommen werden kann. Die Achse der zylindrischen Wand 12 verläuft dabei senkrecht zur Achse des Halbzylinders des Mantels 8.

Aufgrund dieser Anordnung trifft die im Wesentlichen radial durch den Mantel 3 der Einhausung 1 einfallende Lichtstrahlung ebenfalls im Wesentlichen radial auf den Mantel 8 des Brauchwasserbehälters 7, was vorteilhafte Erwärmungsbedingungen für den eine vergleichsweise große Absorberfläche bildenden Mantel 8 des Brauchwasserbehälters 7 mit sich bringt. Da die Absorberplatte 4 gemäß der Fig. 3 einstückig mit dem Mantel 8 des Brauchwasserbehälters 7 ausgebildet ist, wird auch ein vorteilhafter Wärmeübergang von der Absorberplatte 4 auf den Mantel 8 des Brauchwasserbehälters 7 sichergestellt. Die Absorberplatte 4 und der Mantel 8 des Brauchwasserbehälters 7 sind wie beim Ausführungsbeispiel nach den Fig. 1 und 2 mit einem grobmaschigen, wärmedämmenden Gewebe 11, vorzugsweise einem Glasfasergewebe, abgedeckt, um Wärmeverluste durch eine Wärmeabgabe an den Zwischenraum zwischen dem Brauchwasserbehälter 7 und der Einhausung 1 möglichst zu vermeiden.

## Patentansprüche

1. Vorrichtung zum Erwärmen von Brauchwasser mit einem Sonnenkollektor, der einen Brauchwasserbehälter (7) mit einem zylindrischen Mantel (8) als Absorber sowie eine den Brauchwasserbehälter (7) abdeckende Einhausung (1) umfasst, die einen lichtdurchlässigen, teilzylindrischen Mantel (3) bildet, dessen Achse parallel zur Achse des Mantels (8) des Brauchwasserbehälters (7) verläuft, der mit einer einen Boden der Einhausung (1) bildenden Absorberplatte (4) wärmeleitend verbunden ist, **dadurch gekennzeichnet dass** die Absorberplatte (4) den Brauchwasserbehälter (7) in einer sich an den Behältermantel (8) anschmiegenden zylindrischen Auswölbung (6) aufnimmt und dass die Absorberplatte (4) und der Mantel (8) des Brauchwasserbehälters (7) mit einem für den unmittelbaren Durchtritt der Wärmestrahlung grobmaschigen, wärmedämmenden Gewebe (11) abgedeckt sind, so dass eine unmittelbare Berührung von sich innerhalb der Einhausung (1) konvektionsbedingt ausbildender Luftströmungen mit der Absorberplatte (4) oder dem Brauchwasserbehälter (7) weitgehend unterbunden werden kann und die Grobmaschigkeit des Gewebes (11) den unmittelbaren Durchtritt der Wärmestrahlung zur Absorberplatte (4) bzw. zum Brauchwasserbehälter (7) durch das Gewebe sicherstellt.

2. Vorrichtung nach Anspruch 1, **dadurch gekennzeichnet, dass** das Gewebe (11) aus einem Glasfasergewebe besteht.

## Claims

1. Device for heating service water with a solar collector which comprises a service water tank (7) with a cylindrical jacket (8) as an absorber and a housing (1) covering the service water tank (7) and forming a translucent, partly cylindrical jacket (3), the axis of which extends parallel to the axis of the jacket (8) of the service water tank (7) which is connected in a heat conducting manner to an absorber plate (4) forming a base of the housing (1), **characterised in that** the absorber plate (4) receives the service water tank (7) in a cylindrical bulge (6) nestling against the tank jacket (8), and **in that** the absorber plate (4) and the jacket (8) of the service water tank (7) are covered with a thermally insulating fabric (11) which is of a coarse mesh for the direct passage of heat radiation, so that direct contact of air currents forming by convection within the housing (1) with the absorber plate (4) or the service water tank (7) can be largely inhibited and the coarse-mesh property of the fabric (11) ensures the direct passage of heat radiation to the absorber plate (4) or to the service water thank (7) through the fabric.

2. Device as claimed in claim 1, **characterised in that** the fabric (11) consists of a glass-fibre fabric.

## Revendications

1. Dispositif pour réchauffer de l'eau sanitaire avec un collecteur solaire, qui comprend un réservoir d'eau sanitaire (7) avec une enveloppe cylindrique (8) en tant qu'absorbeur ainsi qu'une enceinte (1) recouvrant le réservoir d'eau sanitaire (7), qui forme une enveloppe (3) partiellement cylindrique, perméable à la lumière, dont l'axe est parallèle à l'axe de l'enveloppe (8) du réservoir d'eau sanitaire (7) qui est relié de façon thermoconductrice à une plaque d'absorption (4) formant un fond de l'enceinte (1), **caractérisé en ce que** la plaque d'absorption (4) loge le réservoir d'eau sanitaire (7) dans une convexité (6) cylindrique épousant la forme de l'enveloppe du réservoir (8) et **en ce que** la plaque d'absorption (4) et l'enveloppe (8) du réservoir d'eau sanitaire (7) sont recouvertes d'un tissu (11) thermo-isolant et à grosses mailles pour la pénétration directe du rayonnement thermique, de sorte qu'un contact direct de flux d'air se formant en raison de la convection au sein de l'enceinte (1) peut être largement empêché avec la plaque d'absorption (4) ou le réservoir d'eau sanitaire (7) et que le gros maillage du tissu (11) garantit la pénétration directe du rayonnement thermique pour la plaque d'absorption (4) ou pour le réservoir d'eau sanitaire (7) à travers le tissu.

2. Dispositif selon la revendication 1, **caractérisé en ce que** le tissu (11) est composé d'un tissu de verre.
